# EUROPÄISCHE PATENTSCHRIFT

(11) **EP 3 615 276 B1**
(45) Veröffentlichungstag und Bekanntmachung des Hinweises auf die Patenterteilung: **21.07.2021**
(21) Anmeldenummer: 18718453.6
(22) Anmeldetag: 18.04.2018
(51) Int. Cl.: B25J 9/16

(54) **VORRICHTUNG UND VERFAHREN ZUM EINSTECKEN EINER ELEKTRONISCHEN STECKKARTE IN EINE STECKKUPPLUNG**
DEVICE AND METHOD FOR PLUGGING AN ELECTRONIC EXPANSION BOARD INTO A PLUG-IN COUPLING
DISPOSITIF ET PROCÉDÉ D'ENFICHAGE D'UNE CARTE D'EXTENSION ÉLECTRONIQUE DANS UN RACCORD D'ENFICHAGE

(30) Priorität: 23.04.2017 DE 102017003913
(43) Veröffentlichungstag der Anmeldung: 04.03.2020
(73) Patentinhaber: Franka Emika GmbH, 80797 München (DE)
(72) Erfinder: ENDE, Tobias, 81247 München (DE); HAAS, Michael, 86447 Todtenweis-Sand (DE); HADDADIN, Simon, 80803 München (DE); PARUSEL, Sven, 80687 München (DE); GOLZ, Saskia, 80639 München (DE)
(74) Vertreter: Rösler Rasch van der Heide & Partner
(86) Internationale Anmeldenummer: PCT/EP2018/059855
(87) Internationale Veröffentlichungsnummer: WO 2018/197289

(56) Entgegenhaltungen:
- WO-A2-2009/057416
- US-A1- 2014 114 477

## Beschreibung

Die Erfindung betrifft eine Vorrichtung und ein Verfahren zum Einstecken einer elektronischen Steckkarte in eine Steckkupplung.

Elektronische Steckkarten, werden häufig über sogenannte Steckverbinder lösbar fest mit anderen elektronischen Komponenten verbunden. Die Verbindungsteile (Einsteckbereich der Steckkarte, Steckkupplung) werden dabei typischerweise durch Formschluss passend zueinander ausgerichtet und kraftschlüssig lösbar fixiert. US 2014/114477 A1 und WO 2009/057416 A1 beschreiben solche Ausführungen. Gegebenenfalls erfolgt ein Verschrauben von Steckkarte und Steckkupplung, welches gegen ein unbeabsichtigtes Lösen der Steckverbindung absichert.

Der Begriff "elektronische Steckkarte" wird vorliegend breit gefasst verstanden. Er umfasst grundsätzlich alle elektronische Objekte, die einen Einsteckbereich aufweisen, der in eine Steckkupplung einsteckbar ist.

Die Aufgabe der Erfindung ist es, eine Vorrichtung und ein Verfahren zum Einstecken einer elektronische Steckkarte in eine Steckkupplung anzugeben, sodass ein effektives automatisiertes und zuverlässiges Einstecken der Steckkarte in die Steckkupplung möglich ist.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft eine Vorrichtung zum Einstecken eines Einsteckbereichs einer elektronische Steckkarte in eine Steckkupplung, wobei die Steckkupplung einen

Schlitz mit einer Tiefe T entlang einer Tiefenachse TA, einer Breite B entlang einer Breitenachse BA und einer Länge L entlang einer Längsachse LA aufweist, wobei der Einsteckbereich der Steckkarte derart dimensioniert ist, dass er vollständig in den Schlitz einsteckbar ist, und wobei die Tiefenachse TA und Längsachse LA eine Einsteckebene definieren. Die vorgeschlagene Vorrichtung umfasst eine erste Schnittstelle zum Bereitstellen der Steckkupplung, eine zweite Schnittstelle zum Bereitstellen der Steckkarte, einen ersten Robotermanipulator mit einem Effektor, der zum Aufnehmen, Handhaben und Freigeben der Steckkarte ausgeführt und eingerichtet ist, und eine Steuereinheit zur Steuerung/Regelung des ersten Robotermanipulators, wobei die Steuereinheit zur Ausführung eines Steuerprogramms mit folgenden Schritten eingerichtet und ausgeführt ist: der erste Robotermanipulator nimmt mit dem Effektor die Steckkarte an/von der zweiten Schnittstelle auf und führt die Steckkarte entlang einer vorgegebenen Trajektorie T mit einer vorgegebenen Soll-Orientierung Oₛₒₗₗ(R_{T}) des Einsteckbereichs zur an der ersten Schnittstelle bereitgestellten Steckkupplung, wobei Oₛₒₗₗ(R_{T}) entlang der Trajektorie T für Orte R_{T} der Trajektorie T die Soll-Orientierung des Einsteckbereichs der vom Effektor aufgenommenen Steckkarte definiert, wobei zum Einstecken des Einsteckbereichs in die Steckkupplung durch den ersten Robotermanipulator impedanzgeregelte und/oder admittanzgeregelte Kippbewegungen des Einsteckbereichs in der Einsteckebene ausgeführt werden, bis eine vorgegebene Grenzwertbedingung G1 für ein am Effektor wirkendes Moment und/oder eine vorgegebene Grenzwertbedingung G2 einer am Effektor wirkenden Kraft erreicht oder überschritten wird und/oder eine bereitgestellte Kraft-/Momenten-Signatur und/oder eine Positions-/Geschwindigkeits-/Beschleunigungssignatur am Effektor erreicht oder überschritten wird, die indiziert/indizieren, dass das Einstecken des Einsteckbereichs in die Steckkupplung innerhalb vordefinierter Toleranzen erfolgreich abgeschlossen ist.

Das Steuerprogramm wird durch entsprechend vorgegebene Steuerungs- und Regelungsparameter für die spezielle Anwendung konkretisiert. So können durch Änderung des Steuerprogramms und/oder der zugeordneten Steuerungs- und Regelungsparameter entsprechende Anpassungen der Vorrichtung auf spezielle Anwendungen vorgenommen werden.

Die erste Schnittstelle zum Bereitstellen der Steckkupplung kann ein Fließband, ein Roboter, ein Robotermanipulator, eine Vorrichtung, in der die Steckkupplung eingespannt ist, eine Fördervorrichtung, eine Vereinzelungsanlage für Steckkupplungen, etc. sein. Vorteilhaft ist die Steckkupplung ein Direktsteckverbinder bzw. ein sogenannter "Card-Edge"-Verbinder.

Die zweite Schnittstelle zum Bereitstellen der Steckkarte kann ein Fließband, ein Roboter, ein Robotermanipulator, eine Schütte, eine Vereinzelungsanlage für Steckkarten, etc. sein.

Der Einsteckbereich der Steckkarte ist vorteilhaft im wesentlichen Quader-förmig ausgeführt, wobei die den Quader definierenden drei Kantenlängen (Breite b, Länge I, Höhe h) unterschiedliche Beträge aufweisen, wobei b < h < I. An zwei gegenüberliegenden Oberflächen des Einsteckbereichs sind typischerweise elektrische Kontakte angeordnet, die im in den Schlitz der Steckkupplung eingesteckten Zustand des Einsteckbereichs dort befindliche elektrische Kontakte entsprechend elektrisch kontaktieren.

Eine der Erfindung zu Grunde liegende Erkenntnis ist, dass aufgrund der Ausnutzung einer Hebelwirkung der Kraftaufwand, sofern das Einstecken des Einsteckbereichs in den Schlitz der Steckkupplung mit den vorgeschlagenen Kippbewegungen ausgeführt wird, geringer ist, als der Kraftaufwand, wenn das Einstecken des Einsteckbereichs mit einer reinen Translationsbewegung erfolgt. Durch die vorgeschlagenen Kippbewegungen in der Einsteckebene wird somit der vom Roboter bzw. Robotermanipulator aufzubringende Kraftaufwand verringert, gleichzeitig wird die Belastung der Steckkarte und der Steckkupplung beim Verbinden ebenfalls entsprechend verringert. Insgesamt erfolgt damit die Steckverbindung energiesparender und materialschonender als im Stand der Technik.

Die Kippbewegungen in der Einsteckebene erfolgen bevorzugt periodisch und kontinuierlich. In einer alternativen Ausführungsform erfolgen die Kippbewegungen in der Einsteckebene schrittweise hintereinander, d.h. es erfolgt eine Art "Hineinrütteln" des Einsteckbereichs in den Schlitz der Steckverbindung. Neben den Kippbewegungen werden durch den ersten Robotermanipulator vorteilhaft auch noch überlagerte Translationsbewegungen ausgeführt, die bewirken, dass der Einsteckbereich unter Ausführung der Kippbewegungen in die Steckkupplung geführt wird.

Der Begriff "Signatur" wird vorliegend als Charakteristikum der am Effektor erfassten Kraft- und/oder Momenten-Signale verstanden. Das kann sich auf einzelne Werte oder auf Zeitreihen und daraus abgeleitete Werte der erfassten Kräfte und/oder Momente beziehen.

Vorteilhaft erfolgen die impedanzgeregelten und/oder admittanzgeregelten Kippbewegungen in der Einsteckebene relativ zur Soll-Orientierung Oₛₒₗₗ(R_{T}) des Einsteckbereichs mit maximalen Kippwinkeln im Bereich von ±2° bis ± 30°.

Vorteilhaft weisen der Einsteckbereich und die Steckkupplung einander räumlich zugeordnete elektrische Kontakte auf, die im Falle des in die schlitzförmige Steckkupplung vollständig eingesteckten Einsteckbereichs sich entsprechend elektrisch kontaktieren.

Die Steckkarte ist vorteilhaft eine Computer Hauptplatine (Main Board), ein Computer Speichermodul (RAM, ROM, EPROM, EEPROM, SSD, DRAM, SDRAM, DDR-SDRAM, Flash-Memory, FRAM, MRAM, PCRAM...), eine Computer-Erweiterungsplatine, Grafikkarte, Soundkarte, Netzwerkkarte, Faxkarte, PCI-Karte, PCI-X Karte, PCI-E Karte, ISA-Karte, MCA-Karte, eine EISA-Karte, AGP-Karte, VESA Local Bus-Karte, oder eine Prozessor-Karte. Diese Aufzählung ist natürlich nicht abschließend. Vielmehr sind von dem Erfindungsgedanken sämtliche Steckverbindungen umfasst, bei denen ein Einsteckbereich einer Steckkarte in einen Schlitz einer Steckkupplung eingeführt werden muss.

Eine vorteilhafte Weiterbildung der vorgeschlagenen Vorrichtung zeichnet sich dadurch aus, dass die Steuereinheit zur Ausführung folgenden Steuerprogramms eingerichtet und ausgeführt ist: Steuern des ersten Robotermanipulators derart, dass der Effektor nach erfolgreich abgeschlossenem Einstecken des Einsteckbereichs in die Steckkupplung die Steckkarte freigibt und der Effektor zum Freigeben der Steckkarte kraftgeregelte und/oder impedanzgeregelte und/oder admittanzgeregelte Dreh- und/oder Kippbewegungen und/oder translatorische Bewegungsmuster relativ zur Steckkarte ausgeführt.

Die Dreh- und/oder Kippbewegungen sind für die gesamte vorliegende Beschreibung vorteilhafte periodisch und/oder geschlossene Bewegungen, die kontinuierlich oder schrittweise ausgeführt werden. Alternativ sind je nach Anwendung von aperiodischen Bewegungen oder eine Mischung aus aperiodischen Bewegungen und periodischen Bewegungen möglich.

Vorteilhaft ist die erste Schnittstelle ein zweiter Robotermanipulator mit einem Effektor, der zum Aufnehmen, Handhaben und Freigeben der Steckkupplung ausgeführt und eingerichtet ist. Vorteilhaft entnimmt der zweite Robotermanipulator jeweils eine Steckkupplung aus einem Reservoir und stellt die Steckkupplung an einer vorgegebenen Position mit einer vorgegebenen Orientierung bereit.

In einigen Anwendungsfällen ist die Steckkupplung bei ihrer Bereitstellung an der ersten Schnittstelle bereits fest mit einem weiteren Bauteil (beispielsweise einer elektronischen Platine) verbunden, sodass an der ersten Schnittstelle das jeweilige elektronische Bauteil mit der ersten Schnittstelle bereitgestellt wird. Das Bereitstellen der Steckkupplung an der ersten Schnittstelle versteht sich daher im Rahmen der gesamten Offenbarung auch dahingehend, dass auch eine Kombination einer Steckkupplung mit einem daran fest verbundenen Teil bereitgestellt werden kann.

Eine vorteilhafte Weiterbildung der Vorrichtung zeichnet sich dadurch aus, dass die Vorrichtung eine Datenschnittstelle zu einem Datennetz (bspw. Internet, LAN, Local Area Network) aufweist, und die Vorrichtung dazu eingerichtet und ausgeführt ist, Steuerprogramme aus dem Datennetz zu laden. Vorteilhaft verfügt die Vorrichtung hierzu über ein Dateninterface sowie einen entsprechenden Programmspeicher. Vorteilhaft werden die Steuerprogramme von einem zentralen Provider im jeweiligen Datennetz verfügbar gemacht. Das Datennetz ist vorteilhaft ein leitungsgebundenes Datennetz, ein Funk-Datennetz oder eine Kombination daraus.

Vorteilhaft ist die Vorrichtung dazu eingerichtet und ausgeführt, Steuerungs- und Regelungsparameter zu den Steuerprogrammen aus dem Datennetz zu laden. Die Steuerungs- und Regelungsparameter definieren die konkrete Anwendung des entsprechenden Steuerprogramms. Die Steuerungs- und Regelungsparameter sind insbesondere an die zu lösende Aufgabenstellung (beispielsweise auf die Steckkupplung und den Einsteckbereich der Steckkarte) angepasst. Vorteilhaft verfügt die Vorrichtung hierfür über einen entsprechenden Datenspeicher.

Vorteilhaft ist die Vorrichtung dazu eingerichtet und ausgeführt, Steuerungs- und Regelungsparameter zu den Steuerprogrammen über eine manuelle Eingabeschnittstelle der Vorrichtung (beispielsweise eine im Bereich der Vorrichtung verfügbare Mensch-Maschine-Schnittstelle) und/oder über einen "Teach-In-Vorgang" zu laden, bei dem der Robotermanipulator manuell geführt wird, d.h. durch Aufbringen einer Kraft durch einen Nutzer bewegt wird. Weiterhin ermöglicht sowohl die manuelle Eingabeschnittstelle als auch ein mit dem Robotermanipulator durchgeführter Teach-In-Vorgang eine Korrektur bzw. Anpassung von aus dem Datennetz geladener Steuerungs- und Regelungsparameter.

Vorteilhaft ist die Vorrichtung dazu eingerichtet und ausgeführt, dass das Laden von Steuerungsprogrammen und/oder von zugehörigen Steuerungs- und Regelungsparametern aus dem Datennetz von einer Remote-Station, die ebenfalls mit dem Datennetz verbunden ist, gesteuert wird. Derartige Remote-Stationen können beispielsweise Tablet PCs, Smartphones, Notebooks, Personalcomputer etc. sein. Vorteilhaft wird eine Remote-Station von einem zentralen Provider betrieben.

Vorteilhaft ist die Vorrichtung dazu eingerichtet und ausgeführt, lokal an der Vorrichtung vorhandene Steuerungsprogramme und/oder zugehörige Steuerungs- und Regelungsparametern nach Anforderung von einem Teilnehmer im Datennetz und/oder autonom, bspw. bei Vorliegen einer vorgegebenen Bedingung, an andere Teilnehmer im Datennetz zu senden. Ein solcher "Teilnehmer" kann grundsätzlich jede für diesen Datenaustausch eingerichtete Rechner- und/oder Speichereinheit sein.

Vorteilhaft ist die Vorrichtung dazu eingerichtet und ausgeführt, lokal an der Schraubvorrichtung geladene Steuerungsprogramme mit den zugehörigen Steuerungs-und Regelungsparametern von einer Remote-Station, die ebenfalls mit dem Datennetz verbunden ist, zu starten. Derartige Remote-Stationen können beispielsweise Tablet PCs, Smartphones, Notebooks, Personalcomputer etc. sein. Vorteilhaft wird eine Remote-Station von einem zentralen Provider betrieben.

Vorteilhaft weisen die Remote-Station und/oder die manuelle Eingabeschnittstelle an der Vorrichtung eine Mensch-Maschine-Schnittstelle auf, die zur Eingabe von Steuerungsprogrammen und/oder zugehörigen Steuerungs- und Regelungsparametern; und/oder zur Auswahl von Steuerungsprogrammen und/oder zugehörigen Steuerungs-und Regelungsparametern aus einer Mehrzahl von verfügbaren Steuerungsprogrammen und/oder zugehörigen Steuerungs- und Regelungsparametern ausgeführt und eingerichtet ist.

Vorteilhaft ermöglicht die Mensch-Maschine-Schnittstelle Eingaben via einer "Drag-and-Drop"- Eingabe an einem Touchscreen, einem geführten Eingabedialog, einer Tastatur, einer Computermouse, einer haptischen Eingabeschnittstelle, einer Virtual-Reality-Brille, einer akustischen Eingabeschnittstelle, eines Körpertracking, auf Basis von Elektromyographie-Daten, auf Basis von Elektroenzephalografie-Daten, via einer neuronalen Schnittstelle zum Gehirn des Bedieners oder Kombinationen daraus.

Vorteilhaft ist die Mensch-Maschine-Schnittstelle zur Ausgabe eines audiovisuellen, haptischen, olfaktorischen, taktilen, elektrischen Feedbacks oder einer Kombination daraus ausgeführt und eingerichtet.

Ein weiterer Aspekt der Erfindung betrifft ein Verfahren zum Einstecken eines Einsteckbereichs einer elektronischen Steckkarte in eine Steckkupplung, wobei die Steckkupplung einen Schlitz mit einer Tiefe T entlang einer Tiefenachse TA, eine Breite B entlang einer Breitenachse BA und einer Länge L entlang einer Längsachse LA aufweist, wobei der Einsteckbereich der Steckkarte derart dimensioniert ist, dass er vollständig in den Schlitz einsteckbar ist, und die Tiefenachse TA und Längsachse LA eine Einsteckebene definieren. Das vorgeschlagene Verfahren umfasst folgende Schritte: Bereitstellen der Steckkupplung an einer ersten Schnittstelle, Bereitstellen der Steckkarte an einer zweiten Schnittstelle, Steuern/Regeln eines ersten Robotermanipulators mit einem Effektor, der zum Aufnehmen, Handhaben und Freigeben der Steckkarte ausgeführt und eingerichtet ist derart, dass der erste Robotermanipulator mit dem Effektor die Steckkarte von der zweiten Schnittstelle aufnimmt und die Steckkarte entlang einer vorgegebenen Trajektorie T mit einer vorgegebenen Soll-Orientierung Oₛₒₗₗ(R_{T}) des Einsteckbereichs zur an der ersten Schnittstelle bereitgestellten Steckkupplung führt, wobei Oₛₒₗₗ(R_{T}) entlang der Trajektorie T für Orte R_{T} der Trajektorie T die Soll-Orientierung des Einsteckbereichs definiert, wobei zum Einstecken des Einsteckbereichs in die Steckkupplung durch den ersten Robotermanipulator impedanzgeregelte und/oder admittanzgeregelte Kippbewegungen des Einsteckbereichs in der Einsteckebene ausgeführt werden, bis eine vorgegebene Grenzwertbedingung G1 für ein am Effektor wirkendes Moment und/oder eine vorgegebene Grenzwertbedingung G2 einer am Effektor wirkende Kraft erreicht oder überschritten wird und/oder eine bereitgestellte Kraft-/Momenten-Signatur und/oder eine Positions-/Geschwindigkeitssignatur am Effektor erreicht oder überschritten wird, die indiziert/indizieren, dass das Einstecken des Einsteckbereichs in die Steckkupplung innerhalb vordefinierter Toleranzen erfolgreich abgeschlossen ist.

Vorteilhaft erfolgen die impedanzgeregelten und/oder admittanzgeregelten Kippbewegungen relativ zur Soll-Orientierung Oₛₒₗₗ(R_{T}) des Einsteckbereichs mit maximalen Kippwinkeln in der Einsteckebene im Bereich von ±2 ° bis ± 30°. Vorteilhaft gibt der Effektor nach erfolgreich abgeschlossenem Einstecken des Einsteckbereichs in die Steckkupplung die Steckkarte frei, wobei der erste Robotermanipulator derart gesteuert/geregelt wird, dass dessen Effektor zum Freigeben der Steckkarte kraftgeregelte und/oder impedanzgeregelte und/oder admittanzgeregelte periodische Dreh- und/oder Kippbewegungen und/oder translatorische Bewegungsmuster relativ zur Steckkarte ausführt. Bewegungen erfolgen vorteilhaft nur kurzfristig und führen zu einem schnellen Lösen des Effektors von der Steckkarte.

Eine vorteilhafte Weiterbildung der Verfahren zeichnet sich dadurch aus, dass die jeweilige Vorrichtung eine Datenschnittstelle zu einem Datennetz aufweist, und die Vorrichtung dazu eingerichtet und ausgeführt ist, eines oder mehrere Steuerprogramme aus dem Datennetz zu laden.

Eine vorteilhafte Weiterbildung der Verfahren zeichnet sich dadurch aus, dass die jeweilige Vorrichtung Steuerungs- und Regelungsparameter zu Steuerprogrammen aus dem Datennetz lädt.

Eine vorteilhafte Weiterbildung der Verfahren zeichnet sich dadurch aus, dass die jeweilige Vorrichtung Steuerungs- und Regelungsparameter zu den lokal an der Vorrichtung vorhandenen Steuerprogrammen über eine lokale Eingabeschnittstelle und/oder über einen "Teach-In-Vorgang", bei dem der erste und/oder zweite oder dritte Robotermanipulator manuell geführt werden, lädt.

Eine vorteilhafte Weiterbildung der Verfahren zeichnet sich dadurch aus, dass das Laden von Steuerungsprogrammen und/oder von zugehörigen Steuerungs- und Regelungsparametern aus dem Datennetz in die jeweilige Vorrichtung von einer Remote-Station, die ebenfalls mit dem Datennetz verbunden ist, gesteuert wird.

Eine vorteilhafte Weiterbildung der Verfahren zeichnet sich dadurch aus, dass lokal in der Vorrichtung vorhandene Steuerungsprogramme mit den zugehörigen Steuerungs- und Regelungsparametern von einer Remote-Station, die ebenfalls mit dem Datennetz verbunden ist, gestartet werden.

Vorteile und vorteilhafte Weiterbildungen des Verfahrens sowie weitere Erläuterungen hierzu ergeben sich durch eine sinngemäße und analoge Übertragung der in Zusammenhang mit der vorgeschlagenen Vorrichtung gemachten Ausführungen.

Ein weiterer Aspekt der Erfindung betrifft ein Computersystem mit einer Datenverarbeitungsvorrichtung, wobei die Datenverarbeitungsvorrichtung derart ausgestaltet ist, dass ein Verfahren, wie vorstehend angegeben, auf der Datenverarbeitungsvorrichtung ausgeführt wird.

Ein weiterer Aspekt der Erfindung betrifft ein digitales Speichermedium mit elektronisch auslesbaren Steuersignalen, wobei die Steuersignale so mit einem programmierbaren Computersystem zusammenwirken können, dass ein Verfahren, wie vorstehend angegeben, ausgeführt wird.

Ein weiterer Aspekt der Erfindung betrifft ein Computer-Programm-Produkt mit auf einem maschinenlesbaren Träger gespeicherten Programmcode zur Durchführung des Verfahrens, wie vorstehend angegeben, wenn der Programmcode auf einer Datenverarbeitungsvorrichtung ausgeführt wird.

Ein weiterer Aspekt der Erfindung betrifft ein Computer-Programm mit Programmcodes zur Durchführung des Verfahrens, wie vorstehend angegeben, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: einen stark schematisierten Aufbau einer Vorrichtung,
- Fig. 2: einen stark schematisierten Ablaufplan eines vorgeschlagenen Verfahrens

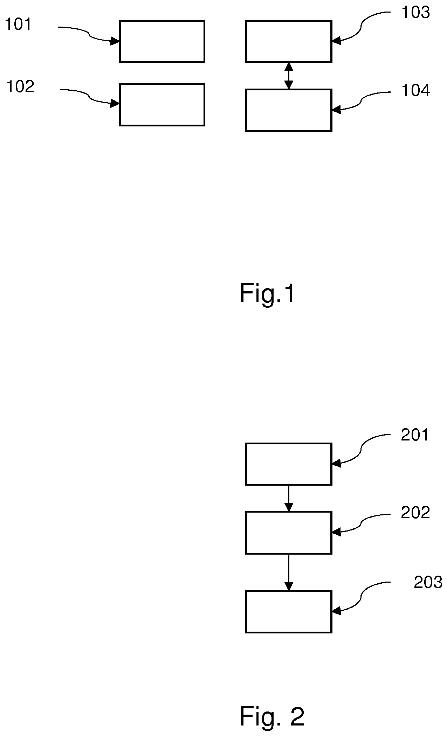

Fig. 1 zeigt einen stark schematisierten Aufbau einer Vorrichtung zum Einstecken eines Einsteckbereichs einer elektronischen Steckkarte in eine Steckkupplung, wobei die Steckkupplung einen Schlitz mit einer Tiefe T entlang einer Tiefenachse TA und einer Länge L entlang einer Längsachse LA aufweist, wobei der Einsteckbereich der Steckkarte derart dimensioniert ist, dass er vollständig in den Schlitz einsteckbar ist, und wobei die Tiefenachse TA und Längsachse LA eine Einsteckebene definieren. Die Vorrichtung ist nicht Teil der vorliegenden Erfindung und umfasst eine erste Schnittstelle 101 zum Bereitstellen der Steckkupplung, vorliegend eine mechanische Einspannvorrichtung auf eine Tischplatte, in der die Steckkupplung bereitgestellt wird. Weiterhin umfasst die Vorrichtung eine zweite Schnittstelle 102 zum Bereitstellen der Steckkarte, vorliegend ein Förderband, auf dem die Steckkarte an einer bestimmten Position und Orientierung bereitgestellt wird. Weiterhin umfasst die Vorrichtung einen ersten Robotermanipulator 103 mit einem Effektor, der zum Aufnehmen, Handhaben und Freigeben der Steckkarte ausgeführt und eingerichtet ist, und eine Steuereinheit 104 zur Steuerung/Regelung des ersten Robotermanipulators 103. Die Steuereinheit 104 umfasst eine Prozessoreinheit und ein darauf laufendes Steuerprogramm, wobei die Steuereinheit 104 zur Ausführung folgender Schritte des Steuerprogramms eingerichtet und ausgeführt ist. In einem Schritt nimmt der erste Robotermanipulator 103 mit dem Effektor die Steckkarte an/von der zweiten Schnittstelle 102 auf und führt die Steckkarte entlang einer vorgegebenen Trajektorie T mit einer vorgegebenen Soll-Orientierung Oₛₒₗₗ(R_{T}) des Einsteckbereichs zur an der ersten Schnittstelle bereitgestellten Steckkupplung, wobei Oₛₒₗₗ(R_{T}) entlang der Trajektorie T für Orte R_{T} der Trajektorie T die Soll-Orientierung des Einsteckbereichs der vom Effektor aufgenommenen Steckkarte definiert. Zum Einstecken des Einsteckbereichs in die Steckkupplung werden durch den ersten Robotermanipulator 103 kraftgeregelte Kippbewegungen des Einsteckbereichs in der Einsteckebene ausgeführt werden, bis eine vorgegebene Grenzwertbedingung G1 für ein am Effektor wirkendes Moment und eine vorgegebene Grenzwertbedingung G2 einer am Effektor wirkenden Kraft erreicht oder überschritten wird, die indizieren, dass das Einstecken des Einsteckbereichs der Steckkarte in die Steckkupplung innerhalb vordefinierter Toleranzen erfolgreich abgeschlossen ist. Den kraftgeregelten Kippbewegungen ist eine translatorische Bewegung überlagert, die den Einsteckbereich in Richtung Schlitz führt.

Fig. 2 zeigt einen stark schematisierten Ablaufplan eines vorgeschlagenen Verfahrens zum Einstecken eines Einsteckbereichs einer elektronischen Steckkarte in eine Steckkupplung, wobei die Steckkupplung einen Schlitz mit einer Tiefe T entlang einer Tiefenachse TA, eine Breite B entlang einer Breitenachse BA und einer Länge L entlang einer Längsachse LA aufweist, wobei der Einsteckbereich der Steckkarte derart dimensioniert ist, dass er vollständig in den Schlitz einsteckbar ist, und die Tiefenachse TA und Längsachse LA eine Einsteckebene definieren, mit folgenden Schritten: Bereitstellen 201 der Steckkupplung an einer ersten Schnittstelle, Bereitstellen 202 der Steckkarte an einer zweiten Schnittstelle, Steuern/Regeln 203 eines ersten Robotermanipulators mit einem Effektor, der zum Aufnehmen, Handhaben und Freigeben der Steckkarte ausgeführt und eingerichtet ist derart, dass der erste Robotermanipulator mit dem Effektor die Steckkarte von der zweiten Schnittstelle aufnimmt und die Steckkarte entlang einer vorgegebenen Trajektorie T mit einer vorgegebenen Soll-Orientierung Oₛₒₗₗ(R_{T}) des Einsteckbereichs zur an der ersten Schnittstelle bereitgestellten Steckkupplung führt, wobei Oₛₒₗₗ(R_{T}) entlang der Trajektorie T für Orte R_{T} der Trajektorie T die Soll-Orientierung des Einsteckbereichs definiert, wobei zum Einstecken des Einsteckbereichs in die Steckkupplung durch den ersten Robotermanipulator 104 impedanzgeregelte und/oder admittanzgeregelte Kippbewegungen des Einsteckbereichs in der Einsteckebene ausgeführt werden, bis eine vorgegebene Grenzwertbedingung G1 für ein am Effektor wirkendes Moment und/oder eine vorgegebene Grenzwertbedingung G2 einer am Effektor wirkenden Kraft erreicht oder überschritten wird und/oder eine bereitgestellte Kraft-/Momenten-Signatur und/oder eine Positions-/Geschwindigkeitssignatur am Effektor erreicht oder überschritten wird, die indiziert/indizieren, dass das Einstecken des Einsteckbereichs in die Steckkupplung innerhalb vordefinierter Toleranzen erfolgreich abgeschlossen ist.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

## Patentansprüche

1. Vorrichtung zum Einstecken eines Einsteckbereichs einer elektronischen Steckkarte in eine Steckkupplung, wobei die Steckkupplung einen Schlitz mit einer Tiefe T entlang einer Tiefenachse TA, eine Breite B entlang einer Breitenachse BA und einer Länge L entlang einer Längsachse LA aufweist, wobei der Einsteckbereich der Steckkarte derart dimensioniert ist, dass er vollständig in den Schlitz einsteckbar ist, und wobei die Tiefenachse TA und Längsachse LA eine Einsteckebene definieren, umfassend:
- eine erste Schnittstelle (101) zum Bereitstellen der Steckkupplung,
- eine zweite Schnittstelle (102) zum Bereitstellen der Steckkarte,
- einen ersten Robotermanipulator (103) mit einem Effektor, der zum Aufnehmen, Handhaben und Freigeben der Steckkarte ausgeführt und eingerichtet ist, und
- eine Steuereinheit (104) zur Steuerung/Regelung des ersten Robotermanipulators (103), wobei die Steuereinheit (104) zur Ausführung eines Steuerprogramms mit folgenden Schritten eingerichtet und ausgeführt ist: der erste Robotermanipulator (103) nimmt mit dem Effektor die Steckkarte an/von der zweiten Schnittstelle (102) auf und führt die Steckkarte entlang einer vorgegebenen Trajektorie T mit einer vorgegebenen Soll-Orientierung Oₛₒₗₗ(R_{T}) des Einsteckbereichs zur an der ersten Schnittstelle bereitgestellten Steckkupplung, wobei Oₛₒₗₗ(R_{T}) entlang der Trajektorie T für Orte R_{T} der Trajektorie T die Soll-Orientierung des Einsteckbereichs der vom Effektor aufgenommenen Steckkarte definiert, wobei zum Einstecken des Einsteckbereichs in die Steckkupplung durch den ersten Robotermanipulator (103) impedanzgeregelte und/oder admittanzgeregelte Kippbewegungen des Einsteckbereichs in der Einsteckebene ausgeführt werden, bis eine vorgegebene Grenzwertbedingung G1 für ein am Effektor wirkendes Moment und/oder eine vorgegebene Grenzwertbedingung G2 einer am Effektor wirkenden Kraft erreicht oder überschritten wird und/oder eine bereitgestellte Kraft-/Momenten-Signatur und/oder eine Positions-/Geschwindigkeits-/Beschleunigungssignatur am Effektor erreicht oder überschritten wird, die indiziert/indizieren, dass das Einstecken des Einsteckbereichs in die Steckkupplung innerhalb vordefinierter Toleranzen erfolgreich abgeschlossen ist.

2. Vorrichtung nach Anspruch 1,
bei der die impedanzgeregelten und/oder admittanzgeregelten Kippbewegungen in der Einsteckebene relativ zur Soll-Orientierung Oₛₒₗₗ(R_{T}) des Einsteckbereichs mit maximalen Kippwinkeln im Bereich von ± 2° bis ± 30°, insbesondere ± 3°, ± 5°, ± 7°, ± 10°, ± 15°, ± 20°, ± 25° erfolgen.

3. Vorrichtung nach Anspruch 1 oder 2,
bei der die Steckkupplung ein Direktsteckverbinder/Card-Edge-Verbinder ist.

4. Vorrichtung nach einem der Ansprüche 1 bis 3,
bei der der Einsteckbereich der Steckkarte und die Steckkupplung einander räumlich zugeordnete elektrische Kontakte aufweisen, die im Falle des in die schlitzförmige Steckkupplung vollständig eingesteckten Einsteckbereichs sich entsprechend elektrisch kontaktieren.

5. Vorrichtung nach einem der Ansprüche 1 bis 4,
bei der die Steuereinheit (104) dazu ausgeführt und eingerichtet ist, den ersten Robotermanipulator (103) derart zu steuern, dass der Effektor nach erfolgreich abgeschlossenem Einstecken des Einsteckbereichs in die Steckkupplung die Steckkarte freigibt.

6. Vorrichtung nach Anspruche 5,
bei der die Steuereinheit (104) dazu ausgeführt und eingerichtet ist, den ersten Robotermanipulator (103) derart zu steuern, dass der Effektor zum Freigeben der Steckkarte kraftgeregelte und/oder impedanzgeregelte und/oder admittanzgeregelte periodische Dreh- und/oder Kippbewegungen und/oder translatorische Bewegungsmuster relativ zur Steckkarte ausführt.

7. Vorrichtung nach einem der Ansprüche 1 bis 6,
bei der die erste Schnittstelle (101) ein zweiter Robotermanipulator mit einem Effektor ist, der zum Aufnehmen, Handhaben und Freigeben der Steckkupplung ausgeführt und eingerichtet ist.

8. Verfahren zum Einstecken eines Einsteckbereichs einer elektronischen Steckkarte in eine Steckkupplung, wobei die Steckkupplung einen Schlitz mit einer Tiefe T entlang einer Tiefenachse TA, eine Breite B entlang einer Breitenachse BA und einer Länge L entlang einer Längsachse LA aufweist, wobei der Einsteckbereich der Steckkarte derart dimensioniert ist, dass er vollständig in den Schlitz einsteckbar ist, und die Tiefenachse TA und Längsachse LA eine Einsteckebene definieren, mit folgenden Schritten:
- Bereitstellen (201) der Steckkupplung an einer ersten Schnittstelle,
- Bereitstellen (202) der Steckkarte an einer zweiten Schnittstelle,
- Steuern/Regeln (203) eines ersten Robotermanipulators mit einem Effektor, der zum Aufnehmen, Handhaben und Freigeben der Steckkarte ausgeführt und eingerichtet ist derart, dass der erste Robotermanipulator mit dem Effektor die Steckkarte von der zweiten Schnittstelle aufnimmt und die Steckkarte entlang einer vorgegebenen Trajektorie T mit einer vorgegebenen Soll-Orientierung Oₛₒₗₗ(R_{T}) des Einsteckbereichs zur an der ersten Schnittstelle bereitgestellten Steckkupplung führt, wobei Oₛₒₗₗ(R_{T}) entlang der Trajektorie T für Orte R_{T} der Trajektorie T die Soll-Orientierung des Einsteckbereichs definiert, wobei zum Einstecken des Einsteckbereichs in die Steckkupplung durch den ersten Robotermanipulator impedanzgeregelte und/oder admittanzgeregelte Kippbewegungen des Einsteckbereichs in der Einsteckebene ausgeführt werden, bis eine vorgegebene Grenzwertbedingung G1 für ein am Effektor wirkendes Moment und/oder eine vorgegebene Grenzwertbedingung G2 einer am Effektor wirkenden Kraft erreicht oder überschritten wird und/oder eine bereitgestellte Kraft-/Momenten-Signatur und/oder eine Positions-/Geschwindigkeitssignatur am Effektor erreicht oder überschritten wird, die indiziert/indizieren, dass das Einstecken des Einsteckbereichs in die Steckkupplung innerhalb vordefinierter Toleranzen erfolgreich abgeschlossen ist.

9. Verfahren nach Anspruch 8,
bei dem die impedanzgeregelten und/oder admittanzgeregelten Kippbewegungen relativ zur Soll-Orientierung Oₛₒₗₗ(R_{T}) des Einsteckbereichs mit maximalen Kippwinkeln im Bereich von ±2° bis ± 30°, insbesondere ± 3°, ± 5°, ± 7°, ± 10°, ± 15°, ± 20°, ± 25° erfolgen.

10. Verfahren nach einem der Ansprüche 8 bis 9,
bei dem der Effektor nach erfolgreich abgeschlossenem Einstecken des Einsteckbereichs in die Steckkupplung die Steckkarte freigibt, wobei der erste Robotermanipulator (103) derart gesteuert/geregelt wird, dass der Effektor zum Freigeben der Steckkarte kraftgeregelte und/oder impedanzgeregelte und/oder admittanzgeregelte periodische Dreh- und/oder Kippbewegungen und/oder translatorische Bewegungsmuster relativ zur Steckkarte ausgeführt.

## Claims

1. A device for plugging an insertion area of an electronic expansion card into a plug-in coupling, wherein the plug-in coupling comprises a slot with a depth T along a depth axis TA, a width B along a width axis BA and a length L along a longitudinal axis LA, wherein the insertion area of the expansion card is dimensioned in such a way that it can be fully inserted into the slot, and wherein the depth axis TA and longitudinal axis LA define an insertion plane, comprising:
- a first interface (101) for providing the plug-in coupling,
- a second interface (102) for providing the expansion card,
- a first robot manipulator (103) with an effector designed and set up to pick up, handle and release the expansion card, and
- a control unit (104) for controlling/regulating the first robot manipulator (103), wherein the control unit (104) is set up and designed to execute a control program with the following steps: the first robot manipulator (103) picks up the expansion card at/from the second interface (102) with the effector and guides the expansion card along a specified trajectory T with a specified target orientation O_{target}(R_{T}) of the insertion area to the plug-in coupling provided on the first interface, wherein O_{target}(R_{T}) defines the target orientation of the insertion area of the expansion card picked up by the effector along the trajectory T for locations RT of the trajectory T, wherein, for the robot manipulator (103) to plug the insertion area into the plug-in coupling, impedance-controlled and/or admittance-controlled tilting movements of the insertion area at the insertion plane are carried out until a specified limit value condition G1 for a moment of force acting on the effector and/or a specified limit value condition G2 of a moment of force acting at the effector is reached or exceeded and/or a provided moment of force/moment-of-force signature and/or a position/speed/acceleration signature at the effector is reached or exceeded, which indicates/indicate that plugging the insertion area into the plug-in coupling has successfully completed within predefined tolerances.

2. The device according to Claim 1,
in which the impedance-controlled and/or admittance-controlled tilting movements in the insertion plane relative to the target orientation O_{target}(R_{T}) of the insertion area take place at maximum tilting angles at a range of ± 2° to ± 30°, more preferably, ± 3°, ± 5°, ± 7°, ± 10°, ± 15°, ± 20°, ± 25°.

3. The device according to Claim 1 or 2,
in which the plug-in coupling is a direct plug connector/card edge connector.

4. The device according to any one of Claims 1 to 3,
in which the insertion area of the expansion card and the plug-in coupling comprise spatially assigned electrical contacts, which electrically contact one another accordingly if the insertion area is fully inserted into the slot-shaped insertion area.

5. The device according to any one of Claims 1 to 4,
in which the control unit (104) is designed and set up to control the first robot manipulator (103) in such a way that the effector releases the expansion card after successfully inserting the insertion area into the plug-in coupling.

6. The device according to Claim 5,
in which the control unit (104) is designed and set up to control the first robot manipulator (103) in such a way that the effector performs periodic force-controlled and/or impedance-controlled and/or admittance-controlled rotary and/or tilting movements, and/or translational movement patterns relative to the expansion card in order to release the expansion card.

7. The device according to any one of Claims 1 to 6,
in which the first interface (101) is a second robot manipulator with an effector designed and set up to pick up, handle and release the plug-in coupling.

8. A method for plugging a insertion area of an electronic expansion card into a plug-in coupling, wherein the plug-in coupling comprises a slot with a depth T along a depth axis TA, a width B along a latitude axis BA and a length L along a longitudinal axis LA, wherein the insertion area of the expansion card is dimensioned in such a way that it can be fully inserted into the slot, and the depth axis TA and longitudinal axis LA define an insertion plane, with the following steps:
- providing (201) the plug-in coupling on a first interface,
- providing (202) the expansion card on a second interface,
- controlling/regulating (203) a first robot manipulator with an effector designed and set up for picking up, handling and releasing the expansion card in such a way that the first robot manipulator picks up the expansion card from the second interface with the effector and guides the expansion card along a specified trajectory T with a specified target orientation O_{target}(R_{T}) of the insertion area to the plug-in coupling provided on the first interface, wherein O_{target}(R_{T}) defines the target orientation of the insertion area along the trajectory T for locations RT of the trajectory T, wherein, for the first robot manipulator to insert the insertion area into the plug-in coupling, impedance-controlled and/or admittance-controlled tilting movements of the insertion area are carried out at the insertion level until a specified limit value condition G1 for a moment of force acting on the effector and/or a specified limit value condition G2 of a moment of force acting on the effector is reached or exceeded and/or a provided force/moment-of-force signature and/or a position/speed signature on the effector is reached or exceeded, which indicates/indicate that plugging the insertion area into the plug-in coupling has been successfully completed within predefined tolerances.

9. The method according to Claim 8,
in which the impedance-controlled and/or admittance-controlled tilting movements relative to the target orientation O_{target}(R_{T}) of the insertion area at maximum tilting angles at a range of ±2° to ± 30°, more preferably, ± 3°, ± 5°, ±]O, ± 10°, ± 15°, ± 20°, ± 25°.

10. The method according to any one of the Claims 8 to 9,
in which the effector releases the expansion card after successfully plugging the insertion area into the plug-in coupling, wherein the first robot manipulator (103) is controlled/regulated in such a way that the effector performs periodic force-controlled and/or impedance-controlled and/or admittance-controlled rotary and/or tilting and/or translational movement patterns relative to the expansion card for releasing the expansion card.

## Revendications

1. Dispositif d'enfichage d'une carte d'extension électronique dans un raccord d'enfichage, sachant que le raccord d'enfichage comporte une fente avec une profondeur T le long d'un axe de profondeur TA, une largeur B le long d'un axe de largeur BA et une longueur L le long d'un axe longitudinal LA, sachant que la zone d'enfichage de la carte d'extension est dimensionnée de telle manière qu'elle peut être complètement enfichée dans la fente et sachant que l'axe de profondeur TA et l'axe longitudinal LA définissent un plan d'enfichage, comprenant :
- une première interface (101) pour préparer le raccord d'enfichage,
- une deuxième interface (102) pour préparer la carte d'extension,
- un premier manipulateur robotisé (103) avec un effecteur, qui est exécuté et agencé pour loger, manipuler et libérer la carte d'extension, et
- une unité de commande (104) pour la commande/le réglage du premier manipulateur robotisé (103), sachant que l'unité de commande (104) est agencée et exécutée pour exécuter un programme de commande avec les étapes suivantes, le premier manipulateur robotisé (103) loge avec l'effecteur la carte d'extension sur/de la deuxième interface (102) et guide la carte d'extension le long d'une trajectoire T prédéfinie avec une orientation théorique prédéfinie O_{théo}(R_{T}) de la zone d'enfichage vers le raccord d'enfichage préparé sur la première interface, sachant que O_{théo}(R_{T}) le long de la trajectoire T pour les endroits R_{T} de la trajectoire T, définit l'orientation théorique de la zone d'enfichage de la carte d'extension logée par l'effecteur, sachant que des mouvements de basculement réglés par impédance et/ou réglés par admittance de la zone d'enfichage sont exécutés dans le plan d'enfichage pour l'enfichage de la zone d'enfichage dans le raccord d'enfichage par le premier manipulateur robotisé (103) jusqu'à ce qu'une condition de valeur limite prédéfinie G1 pour un couple agissant sur l'effecteur et/ou une condition de valeur limite prédéfinie G2 d'une force agissant sur l'effecteur soit atteinte ou dépassée et/ou une signature force/couple préparée et/ou une signature position/vitesse/accélération soit atteinte ou dépassée sur l'effecteur, qui indique/indiquent, que l'enfichage de la zone d'enfichage est achevée avec succès dans le raccord d'enfichage dans les tolérances prédéfinies.

2. Dispositif selon la revendication 1,
pour lequel les mouvements de basculement réglés par impédance et/ou réglés par admittance par rapport à une orientation théorique O_{théo}(R_{T}) de la zone d'enfichage ont lieu dans le plan d'enfichage avec des angles de basculement maximaux dans une plage de ± 2° à ± 30°, en particulier ± 3°, ± 5°, ± 7°, ± 10°, ± 15°, ± 20°, ± 25°.

3. Dispositif selon la revendication 1 ou 2,
pour lequel le raccord d'enfichage est un connecteur d'enfichage direct/connecteur 'Bord de carte'.

4. Dispositif selon l'une quelconque des revendications 1 à 3,
pour lequel la zone d'enfichage de la carte d'enfichage et le raccord d'enfichage comportent des contacts électriques attribués réciproquement dans l'espace, qui entrent électriquement en contact de façon appropriée en cas de zone d'enfichage complètement enfichée dans le raccord d'enfichage en forme de fente.

5. Dispositif selon l'une quelconque des revendications 1 à 4,
pour lequel l'unité de commande (104) est exécutée et agencée à cet effet pour commander le premier manipulateur robotisé (103) de telle manière que l'effecteur libère la carte d'extension après enfichage achevé avec succès de la zone d'enfichage.

6. Dispositif selon la revendication 5,
pour lequel l'unité de commande (104) est exécutée et agencée à cet effet pour commander le premier manipulateur robotisé (103) de telle manière que l'effecteur effectue des mouvements de rotation et/ou de basculement périodiques réglés par force et/ou réglés par impédance et/ou réglés par admittance et/ou un type de mouvement translatoire par rapport à la carte d'enfichage pour libérer la carte d'extension.

7. Dispositif selon l'une quelconque des revendications 1 à 6,
pour lequel la première interface (101) est un deuxième manipulateur robotisé avec un effecteur, qui est exécuté et agencé pour loger, manipuler et libérer le raccord d'enfichage.

8. Procédé d'enfichage d'une zone d'enfichage d'une carte d'extension électronique dans un raccord d'enfichage, sachant que le raccord d'enfichage comporte une fente avec une profondeur T le long d'un axe de profondeur TA, une largeur B le long d'un axe de largeur BA et une longueur L le long d'un axe longitudinal LA, sachant que la zone d'enfichage de la carte d'extension est dimensionnée de telle manière qu'elle peut être enfichée complètement dans la fente et l'axe de profondeur TA et l'axe longitudinal LA définissent un plan d'enfichage avec les étapes suivantes :
- préparation (201) du raccord d'enfichage sur une première interface,
- préparation (202) de la carte d'extension sur une deuxième interface,
- commande/réglage (203) d'un premier manipulateur robotisé avec un effecteur, qui est exécuté et agencé pour loger, manipuler et libérer la carte d'extension de telle manière que le premier manipulateur robotisé loge avec l'effecteur la carte d'extension de la deuxième interface et guide la carte d'extension le long d'une trajectoire T prédéfinie avec une orientation théorique prédéfinie O_{théo}(R_{T}) de la zone d'enfichage vers le raccord d'enfichage préparé sur la première interface, sachant que O_{théo}(R_{T}) le long de la trajectoire T pour les endroits R_{T} de la trajectoire T, définit l'orientation théorique de la zone d'enfichage, sachant que des mouvements de basculement réglés par impédance et/ou réglés par admittance de la zone d'enfichage sont exécutés dans le plan d'enfichage pour l'enfichage de la zone d'enfichage dans le raccord d'enfichage par le premier manipulateur robotisé jusqu'à ce qu'une condition de valeur limite prédéfinie G1 pour un couple agissant sur l'effecteur et/ou une condition de valeur limite prédéfinie G2 d'une force agissant sur l'effecteur soit atteinte ou dépassée et/ou une signature force/couple préparée et/ou une signature position/vitesse soit atteinte ou dépassée sur l'effecteur, qui indique/indiquent, que l'enfichage de la zone d'enfichage est achevée avec succès dans le raccord d'enfichage dans les tolérances prédéfinies.

9. Procédé selon la revendication 8,
pour lequel les mouvements de basculement réglés par impédance et/ou réglés par admittance par rapport à une orientation théorique O_{théo}(R_{T}) de la zone d'enfichage ont lieu avec des angles de basculement maximaux dans une plage de ± 2° à ± 30°, en particulier ± 3°, ± 5°, ± 7°, ± 10°, ± 15°, ± 20°, ± 25° .

10. Procédé selon l'une quelconque des revendications 8 à 9,
pour lequel l'effecteur libère la carte d'extension après enfichage achevé avec succès de la zone d'enfichage dans le raccord d'enfichage, sachant que le premier manipulateur robotisé (103) est piloté/régulé de telle manière que l'effecteur effectue des mouvements de rotation et/ou de basculement réglés par force et/ou réglés par impédance et/ou réglés par admittance et/ou un type de mouvement translatoire par rapport à la carte d'extension pour libérer la carte d'extension.
